Europäisches Patentamt

European Patent Office

Office européen des brevets

(11) Veröffentlichungsnummer: **0 414 317 A2**

## (12) EUROPÄISCHE PATENTANMELDUNG

(21) Anmeldenummer: 90202233.4

(22) Anmeldetag: 20.08.90

(51) Int. Cl.5: **H02M 7/523**

(30) Priorität: 24.08.89 DE 3927888

(43) Veröffentlichungstag der Anmeldung:
27.02.91 Patentblatt 91/09

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**
(84) **DE**

Anmelder: **N.V. Philips' Gloeilampenfabrieken**
**Groenewoudseweg 1**
**NL-5621 BA Eindhoven(NL)**
(84) **FR**

(72) Erfinder: **Vogler, Gerd**
**Königgrätzer Strasse 8**
**D-4950 Minden(DE)**

(74) Vertreter: **Hartmann, Heinrich, Dipl.-Ing. et al**
**Philips Patentverwaltung GmbH**
**Wendenstrasse 35 Postfach 10 51 49**
**D-2000 Hamburg 1(DE)**

(54) Wechselrichteranordnung.

(57) Die Erfindung betrifft eine Wechselrichteranordnung, insbesondere für einen Röntgengenerator mit einem Schwingkreis, und wenigstens zwei von je einer Halbschwingung des Schwingkreisstromes durchflossenen, im Gegentakt geschalteten elektronischen Schaltern, über die der Schwingkreis mit einer Gleichspannungsquelle koppelbar ist. Dabei läßt sich eine besonders hohe abgegebene Leistung dadurch erreichen, daß als elektronische Schalter GTO-Thyristoren dienen, die von einer Impulserzeugeranordnung geschaltet sind, welche im Bereich des Nulldurchganges des Schwingkreisstroms jeweils einen Sperrimpuls erzeugt und durch welche ein Zündimpuls für den anschließend leitenden GTO-Thyristor nach einer definierten Verzögerungszeit nach dem Wirksamwerden des Sperrimpulses erzeugbar ist.

FIG.2

## WECHSELRICHTERANORDNUNG

Die Erfindung betrifft eine Wechselrichteranordnung, insbesondere für einen Röntgengenerator, mit einem Serien-Schwingkreis und wenigstens zwei von je einer Halbschwingung des Schwingkreisstromes durchflossenen, im Gegentakt geschalteten elektronischen Schaltern, über die der Serien-Schwingkreis mit einer Gleichspannungsquelle koppelbar ist.

Derartige Wechselrichter sind bekannt (DE-OS 3046 413; DE-OS 30 46 767 und DE-OS 32 18 535). Die elektronischen Schalter sind dabei während jeweils einer Halbschwingung leitend, und die von einem derartigen Wechselrichter erzeugbare elektrische Leistung ist umso größer, je dichter die Halbschwingungen aufeinander folgen, die im Gegentakt die elektronischen Schalter durchfließen.

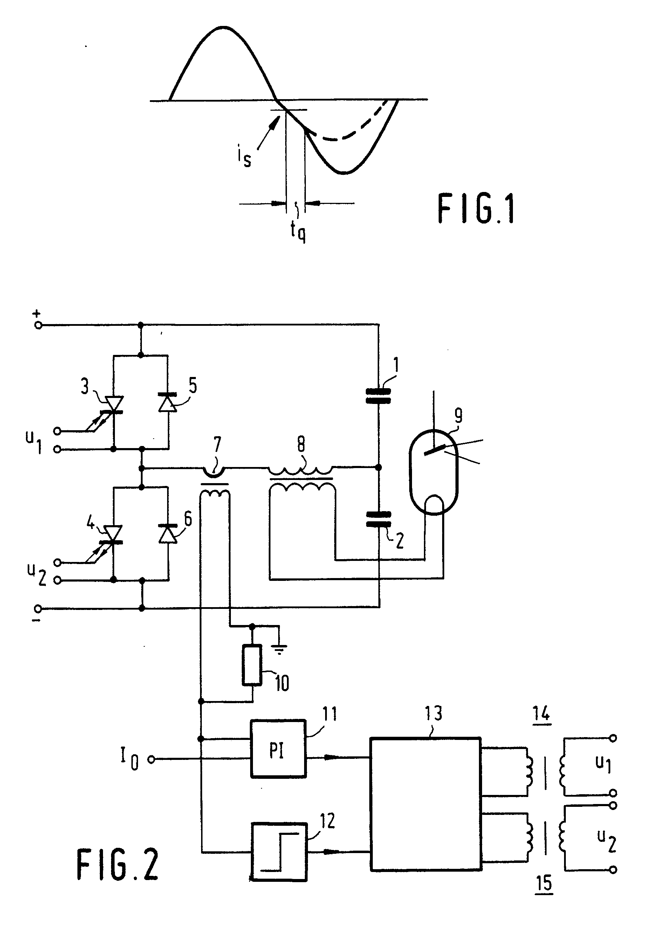

Bei den bekannten Wechselrichtern werden die elektronischen Schalter durch Thyristoren gebildet, die in Durchlaßrichtung mit der Gleichspannungsquelle verbunden sind und denen jeweils eine Diode antiparallel geschaltet ist. Bei derartigen elektronischen Schaltern ist es nicht möglich, die Halbschwingungen unmittelbar nacheinander durch die in Gegentakt gesteuerten Schalter fließen zu lassen, wie sich aus Fig. 1 ergibt, die den zeitlichen Verlauf des Schwingkreisstroms bei der bekannten Wechselrichteranordnung darstellt. Dabei ist angenommen, daß während der einen positiven Halbschwingung ein Thyristor leitend ist. Nach dem Stromnulldurchgang übernimmt die dem Thyristor parallelgeschaltete Diode zunächst den Rückschwingstrom und der gezünde Thyristor verliert seine Leitfähigkeit. Die negative Halbschwingung des Rückschwingstroms (in Fig. 1 zum Teil gestrichelt angedeutet) hat als Folge der an den Verbraucher abgegebenen Wirkleistung eine kleinere Amplitude als die positive Halbschwingung.

Der im Gegentakt gesteuerte Thyristor darf erst gezündet werden, wenn nach dem Stromnulldurchgang durch den vorher leitenden Thyristor die sogenannte Freiwerdezeit (tq) verstrichen ist, die für den Abbau der Ladungsträger benötigt wird. Wie in der DE-OS 30 46767 beschrieben, kann der Zündimpuls mit Hilfe einer Verzögerungsschaltung erzeugt werden, die durch den Stromnulldurchgang gestartet wird. Zur Erkennung des Stromnulldurchganges ist in der Regel eine Komparatorschaltung vorgesehen, deren Eingang ein dem momentanen Schwingkreisstrom proportionaler Wert zugeführt wird und die anspricht, sobald der Schwingkreisstrom unter einen Wert $i_s$ gesunken ist. Dieser Wert $i_s$ muß genügend groß sein, um zu verhindern, daß dem Meßsignal überlagerte Störsignale die Verzögerungsschaltung starten und damit unter Umständen ein vorzeitiges Erzeugen der Zündimpulse auslösen können. Zwischen dem Erlöschen des einen Thyristors muß also zumindest ein Zeitraum verstreichen, der der Summe aus der Freiwerdezeit und der Zeit entspricht, innerhalb der der Rückschwingstrom nach dem Stromnulldurchgang den Wert $i_s$ erreicht. Bei einer besonders großen Last bzw. einer besonders großen abgegebenen Wirkleistung kann es dabei sogar vorkommen, daß der Rückschwingstrom den Wert $i_s$ nicht erreicht, so daß der die nächste Halbschwingung startende Zündimpuls nicht erzeugt werden kann. Daraus resultieren Spannungs- bzw. Stromeinbrüche an der Last.

Aufgabe der vorliegenden Erfindung ist es, einen Wechselrichter der eingangs genannten Art so auszugestalten, daß der Zeitraum, innerhalb dessen der Schwingkreisstrom vom einen elektronischen Schalter auf den anderen übergeht, verkürzt werden kann, so daß die abgebbare Leistung vergrößert wird.

Diese Aufgabe wird erfindungsgemäß dadurch gelöst, daß als elektronische Schalter GTO-Thyristoren dienen, die von einer Impulserzeugeranordnung geschaltet sind, welche im Bereich des Nulldurchganges des Schwingkreisstroms jeweils einen Sperrimpuls erzeugt und durch welche ein Zündimpuls für den anschließend leitenden GTO-Thyristor nach einer definierten Verzögerungszeit nach dem Wirksamwerden des Sperrimpulses erzeugbar ist.

Die Erfindung verwendet also GTO-Thyristoren (GTO = Gate Turn Off). Es ist bekannt, daß GTO-Thyristoren wie normale Thyristoren betrieben werden können, falls ihrem Gate nur Zündimpulse zugeführt werden. In diesem Fall wird auch der GTO-Thyristor erst nach dem Stromnulldurchgang gesperrt. Es ist aber auch möglich, durch einen Sperrimpuls, der die entgegengesetzte Polarität haben muß wie der Zündimpuls, einen GTO-Thyristor zu sperren, bevor der ihn durchfließende Strom durch Null geht. Von dieser Möglichkeit wird bei dem in der EP-OS137 401 beschriebenen Wechselrichter Gebrauch gemacht. Über das Gate des Thyristors müssen in diesem Fall mindestens 20% des zu schaltenden Stromes als Sperrstrom fließen, was einen entsrechend leistungsstarken und daher teuren Impulserzeuger voraussetzt.

Die Erfindung nutzt die Tatsache aus, daß bei einem Wechselrichter der eingangs genannten Art der die elektronischen Schaltelemente durchfließende Strom sinusförmig einem Nulldurchgang zustrebt. Im Bereich des Nulldurchganges des Schwingkreisstromes kann der stromführende GTO-Thyristor aber mit relativ leistungsschwachen Sperr impulsen gesperrt werden. Dafür reicht ein leistungsschwacher Impulserzeuger aus. An sich leitet ein GTO-Thyristor nach dem Nulldurchgang des ihn durchfließenden Stromes ohnehin nicht mehr. Durch den Sperrimpuls wird aber der Ladungsträgerabbau in dem GTO-Thyristor beschleunigt und damit die Freiwerdezeit erheblich verkürzt. Der Zündimpuls für den nächsten GTO-Thyristor kann dann dem Sperrimpuls in kürzestem zeitlichen Abstand folgen, so daß sich zwischen den beiden Halbschschwingungen kaum noch eine Lücke ergibt.

Der Sperrimpuls muß nicht exakt im Nulldurchgang des Schwingkreisstromes beginnen; er kann auch etwas (bis zu 2% der Periodendauer) früher oder später, d.h. im Bereich des Nulldurchgangs, erzeugt werden.

Wenn die Sperrimpulse noch weiter vor dem Nulldurchgang von einem relativ hochohmigen Impulserzeuger geliefert werden, werden sie durch die dann noch sehr niederohmige Gate-Kathoden-Strecke des GTO-Thyristors praktisch kurzgeschlossen. Dies ändert sich erst, wenn die genannte Strecke hochohmiger wird. Obwohl in diesem Fall der Sperrimpuls schon relativ früh beginnt, wird er erst im Bereich des Nulldurchgangs wirksam.

Wie sich aus obigem ergibt, besteht eine Möglichkeit für die Festlegung des Anfangs eines Sperrimpulses darin, die Leitfähigkeit der Gate-Kathoden-Strecke zu bestimmen. Dies ist jedoch verhältnismäßig aufwendig, weil es die Messung der Leitfähigkeit dieser Strecke erfordert. Eine einfachere Ausgestaltung der Erfindung sieht demgegenüber vor, daß eine Meßeinrichtung für den Schwingkreisstrom vorgesehen ist, die mit einer Komparatorschaltung gekoppelt ist, die anspricht, wenn der Schwingkreisstrom einen Referenzwert unterschreitet, und daß die Impulserzeugeranordnung von der Komparatorschaltung gesteuert wird, derart, daß der Sperrimpuls mit definierter Verzögerung nach dem Unterschreiten des Referenzwertes erzeugt wird. Hierbei muß also nicht die Leitfähigkeit der Gate-Kathoden-Strecke der GTO-Thyristoren gemessen werden, sondern nur der Schwingkreisstrom, der zu Regelzwecken ohnehin gemessen werden muß. Der zeitliche Verlauf der aktiven Schwingstromhalbwelle ist - anders als der Verlauf des Rückschwingstromes - von der Belastung des Wechselrichters weitgehend unabhängig. Infolgedessen hängt die zeitliche Lage des Sperrimpulses und in seiner Folge die zeitliche Lage des Zündimpulses für den anderen GTO-Thyristor - jeweils bezogen auf den Nulldurchgang des Schwingkreisstromes - nicht von der Belastung ab. Insbesondere kann es nicht zum Ausfall eines Zündimpulses kommen - wie bei Wechselrichtern der eingangs genannten Art.

Die Erfindung wird nachstehend anhand der Zeichnung näher erläutert. Es zeigen

Fig. 1 den zeitlichen Verlauf des Schwingkreisstroms bei einem Serienresonanz-Wechselrichter, dessen elektronische Schalter jeweils einen Thyristor umfassen,

Fig. 2 einen erfindungsgemäßen Wechselrichter zur Erzeugung des Heizstromes einer Röntgenröhre,

Fig. 3 einen dabei verwendbaren Fenster-Komparator,

Fig. 4a und 4b den zeitlichen Verlauf verschiedener Signale bei maximaler und bei verminderter abgegebener Leistung und

Fig. 5 ein Prinzipschaltbild eines für die Hochspannungserzeugung einer Röntgenröhre benutzten Wechselrichters, bei dem die Erfindung ebenfalls anwendbar ist.

An den Eingangsklemmen + und - wird dem in Fig. 2 gezeigten Wechselrichter eine Gleichspannung zugeführt, die beispielsweise durch Gleichrichtung (nicht näher dargestellt) aus einer Wechselspannung erzeugt werden kann. An die Gleichspannung ist die Serienschaltung zweier gleich großer Kondensatoren 1 und 2 angeschlossen, der die Serienschaltung zweier elektronischer Schalter parallelgeschaltet ist. Jeder Schalter besteht aus einem GTO-Thyristor 3 bzw. 4 und einer dazu antiparallel geschalteten Diode 5 bzw. 6. Die Verbindungspunkte der Schalter 3, 5 und 4,6 einerseits sowie der Kondensatoren 1,2 andererseits sind über einen Brückenzweig miteinander verbunden, der die Serienschaltung der Primärwicklungen eines Stromwandlers 7 zur Messung des Istwertes des Schwingkreisstroms und eines Heiztransformators 8 umfaßt, an dessen Sekundärwicklung der Heizfaden einer Röntgenröhre 9 angeschlossen ist.

Der Heiztransformator ist für die Trennung der Potentiale auf seiner Primärseite (nahezu Erdpotential) und seiner Sekundärseite (negatives Hochspannungspotential) ausgelegt und besitzt daher eine relativ große Streuinduktivität, die zusammen mit einem den Kondensatoren 1 und 2 einen Serienresonanzkreis mit einer Serienresonanzfrequenz von z.B. 15 kHz bildet. Bei der einen Halbschwingung fließt ein Schwingkreisstrom über die Kondensatoren 1 und 2, die Primärwicklung 8 und den GTO-Thyristor 4, und bei der anderen Halbschwingung fließt ein Strom über den GTO-Thyristor 3, die Primärwicklung 8 und die Kondensatoren 1 und 2.

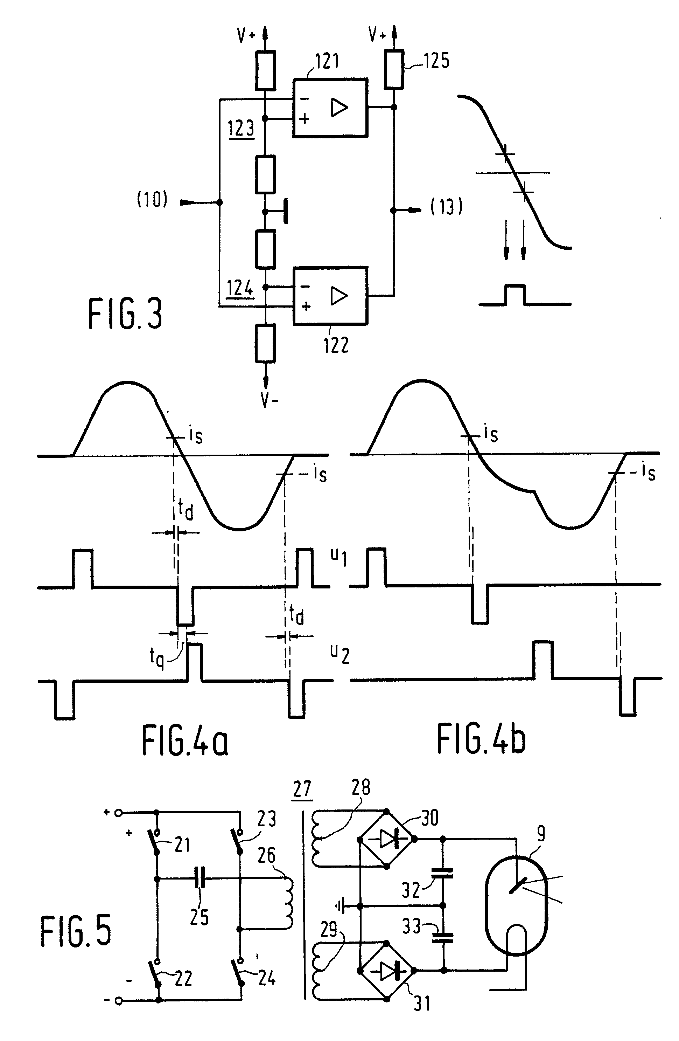

An die Sekundärwicklung des Stromwandlers 7 ist ein Widerstand 10 angeschlossen. Die Spannung an diesem Widerstand ist dem Momentanwert des Stromes durch die Primärwicklung 8 proportional. Sie wird einerseits einem Regler 11 mit PI-Charakteristik zugeführt und andererseits einem Fensterkomparator 12. Der Regler 11 vergleicht den Sollwert $I_o$ des Heizstroms mit dem Effektivwert des gemessenen Stroms (zur Erzeugung dieses Effektivwertes aus dem Momentanwert am Widerstand 10 muß ein nicht näher dargestellter RMS-Baustein zur Erzeugung des Effektivwertes vorhanden sein) und liefert ein Ausgangssignal, das von der Differenz dieser Werte abhängt. Der Fensterkomparator 12 spricht an, sobald der Momentanwert des Stromes unter einen Wert $i_s$ gesunken ist. Dieser Wert soll zwar klein im Vergleich zur Amplitude des Schwingkreisstromes sein, aber immer noch so groß, daß das Ansprechen weitgehend unbeeinflußt von Störsignalen erfolgt; bei einer Amplitude von 8A beispielsweise ist $i_s = 0,5A$ ein geeigneter Wert. Der Aufbau dieses Fensterkomparators ist in Fig. 3 dargestellt.

Der Komparator umfaßt zwei Verstärker 121 und 122 mit hochohmigem Ausgang, denen die Spannung am Widerstand 10 zugeführt wird. Die nichtinvertierenden Eingänge der Verstärker 121 bzw. 122 sind mit dem Abgriff eines zwischen Masse und die positive Versorgungsspannung V + geschalteten Spannungsteilers 123 bzw. mit dem Signaleingang des Komparators verbunden. Die invertierenden Eingänge der Verstärker 121 bzw. 122 sind mit dem Signaleingang bzw. dem Abgriff eines weiteren, zwischen Masse und die negative Versorgungsspannung V-geschalteten Spannungsteilers 124 verbunden. Die Ausgänge der beiden Verstärker 121, 122 sind miteinander sowie über einen Widerstand 125 mit der positiven Versorgungsspannung V + verbunden. Diese Ausgänge bilden auch den Ausgang des Fensterkomparators.

Solange der Schwingkreisstrom positiv ist und mithin die Spannung am Widerstand 10 größer ist als die positive Gleichspannung am Abgriff des Potentiometers 123, liefert der Verstärker 121 einen Strom (der Verstärker 122 ist gesperrt), so daß sich am gemeinsamen Ausgang ein niedriges Potential ergibt. Sinkt die Spannung am gemeinsamen Eingang unter die Spannung am Abgriff des Potentiometers 123 (in diesem Fall ist der Schwingkreisstrom unter den Wert $i_s$ gesunken), dann liefert auch der Verstärker 121 keinen Strom mehr. Erst nachdem die gemeinsame Eingangsspannung einen negativen Wert unterschritten hat, der der Spannung am Abgriff des Potentiometers 124 entspricht, liefert der Verstärker 122 einen Strom. Somit liefert der Fensterkomparator bei jedem Nulldurchgang des Schwingkreisstroms (in beiden Richtungen) einen positiven Impuls, dessen Vorderflanke zur Erzeugung eines Sperrimpulses dient.

Der Regler 11 und der Fensterkomparator 12 steuern eine Triggerschaltung 13, die ähnlich den Triggerschaltungen für Thyristoren u.a. Flip-Flops, logische Verknüpfungsschaltungen und einen spannungsgesteuerten Oszillator enthalten kann, der von dem Regler 11 gesteuert wird und die Frequenz der Zündimpulse bestimmt. Die Sperrimpulse beginnen nach einer definierten Verzögerungszeit nach der Vorderflanke der von dem Fensterkomparator 12 gelieferten Impulse. Die Triggerschaltung besitzt zwei Ausgänge, die über Impulsübertrager 14 bzw. 15 mit den Gate-Kathoden-Strecken der GTO-Thyristoren 3 bzw. 4 gekoppelt sind.

Die Arbeitsweise der Triggerschaltung ergibt sich aus den Figuren 4a und 4b, die den zeitlichen Verlauf des Schwingkreisstromes (1. Zeile) und der Ausgangsspannungen der Impulsübertrager $u_1$ bzw. $u_2$ (2. und 3. Zeile) für maximale Ausgangsleistung (Fig. 4a) und für eine niedrigere Ausgangsleistung (Fig. 4b) darstellen.

Die erste (positive) Halbschwingung des Schwingkreisstro mes wird durch einen Zündimpuls für den zugehörigen GTO-Thyristor (z.B. 3) eingeleitet (Spannung $u_1$), nachdem zuvor der andere GTO-Thyristor (4) gesperrt worden ist. Der Zündimpuls muß mindestens solange dauern, daß der Schwingkreisstrom den Wert des Einraststroms überschritten hat, bevor der Zündimpuls endet. Nachdem die Halbschwingung ihr Maximum (z.B. 8A) durchlaufen und der Schwingkreisstrom schließlich einen Wert $i_s$ (z.B.) unterschritten hat, liefert der Fensterkomparator einen positiven Impuls, der innerhalb der Triggerschaltung die Erzeugung eines Sperrimpulses bewirkt, der die entgegengesetzte Polarität hat wie der vorherige Zündimpuls, und dessen Vorderflanke gegenüber der Vorderflanke des von dem Fensterkomparator 12 gelieferten Impulses um eine definierte Verzögerungszeit $t_d$ versetzt ist. Bei einer Dauer der Halbschwingung von z.B. 33 $\mu$s ist $t_d = 0,6\mu$s bei dem angegebenen Wert $i_s$ ein günstiger Wert, der sich aus den Verzögerungszeiten der Triggerschaltung 13 und der Impulsübertrager 14,15 ergibt - also ohne zusätzliches Verzögerungsglied. Der Sperrimpuls liegt im günstigsten Falle zeitlich so, daß die Halbschwingung durch ihn nicht vorzeitig beendet wird, andererseits die Ladungsträger aus dem gesperrten GTO-Thyristor aber möglichst unmittelbar nach dem Nulldurchgang des Schwingkreisstromes beseitigt sind.

Nach dem Sperren des Thyristors 3 wird der GTO-Thyristor 4 gezündet( mit $u_2$). Zwischen den Vorderflanken des Sperrimpulses für den GTO-Thyristor 3 und des Zündimpulses für den GTO-Thyristor 4 muß dabei ein Zeitraum verstreichen, der zumindest der größtmöglichen Freiwerdezeit $t_q$ entspricht. Bei geeigneter Anpassung zwischen dem Schwellenwert $i_s, t_d$ und $t_q$ läßt sich erreichen, daß die sich anschließende negative Halbschwingung zusammen mit der vorigen positiven Halbschwingung einen nahezu sinusförmigen Stromverlauf ergibt. Wenn nach dem Zünden des GTO-Thyristors die negative Halbschwingung den Wert

-i_s erreicht hat, folgt ein Sperrimpuls für den GTO-Thyristor 4, wonach mit der erwähnten Verzögerungszeit wiederum ein Zündimpuls für den GTO-Thyristor 3 folgt. Die Sperrimpulse können so breit gemacht werden, daß sie sich mit den Zündimpulsen überlappen, solange sichergestellt ist, daß zwischen dem Sperrimpuls für den einen GTO-Thyristor und den Zündimpuls für den anderen GTO-Thyristor die erforderliche Verzögerung ($t_q$) besteht.

Fig. 4b zeigt die gleichen Signale bei einer geringeren vom Wechselrichter abgegebenen Leistung. Dabei ist angenommen, daß die erste Stromhalbschwingung noch im Nulldurchgang gezündet worden ist. Wenn der Maximalwert überschritten und wiederum der Wert $i_s$ erreicht ist, wird wiederum ein Sperrimpuls für den Thyristor 3 erzeugt. Der Zündimpuls für den GTO-Thyristor 4 folgt aber nicht schon nach Ablauf der Freiwerdezeit, sondern wesentlich später. Zwischen dem Nulldurchgang der positiven Halbschwingung und dem Zündimpuls für den Thyristor 4 ergibt sich daher zunächst ein negativer Rückschwingstrom, der über die Diode 5 fließt. Erst nach dem Zündimpuls für den Thyristor 4 endet diese Phase, der dann ein Teil der negativen Halbschwingung folgt.

Der Vergleich der Figuren 4a und 4b zeigt, daß die Sperrimpulse unabhängig von der abgegebenen Leistung immer dann - mit Verzögerung - erzeugt werden, wenn der Strom dem Betrage nach unter den Wert $i_s$ sinkt. Nach Ablauf der Freiwerdezeit tg kann ein Zündimpuls für den jeweils anderen GTO-Thyristor erzeugt werden (wie in Fig. 4a), doch kann dieser Impuls auch später erzeugt werden, wie in Fig. 4b.

In Fig. 5 ist ein Serienresonanz-Wechselrichter für die Erzeugung der Hochspannung für eine Röntgenröhre 9 dargestellt, der ebenfalls entsprechend der Erfindung aufgebaut sein kann. Hierbei umfaßt der Wechselrichter jeweils zwei parallel an die Versorgungsspannungsklemmen + und - angeschlossene Schaltzweige, die aus der Serienschaltung jeweils zweier elektronischer Schaltelemente 21 und 22 bzw. 23 und 24 bestehen. Jedes dieser elektronischen Schaltelemente besteht aus einem GTO-Thyristor und einer dazu antiparallel geschalteten Diode. Zwischen die Verbindungspunkte der Schaltelemente 21 und 22 einerseits und der Schaltelemente 23 und 24 anderseits ist die Serienschaltung eines Kondensators 25 und der Primärwicklung 26 eines Hochspannungstransformators 27 geschaltet. Dieser hat eine relativ große Streuinduktivität, die zusammen mit dem Kondensator 25 einen Serienresonanzkreis bildet. Der Hochspannungstransformator 27 hat zwei Sekundärwicklungen 28 bzw. 29, die einen Gleichrichter 30 bzw. 31 zur Erzeugung einer positiven bzw. negativen Hochspannung speisen, die von Kondensatoren 32 und 33 geglättet und der Anode bzw. der Kathode der Röntgenröhre 9 zugeführt wird.

Den in der Brückendiagonale befindlichen Schaltelementen 21 und 24 (bzw. 22 und 23) wird jeweils die gleiche Impulsspannung zugeführt, wenn man einmal von dem erforderlichen Potentialversatz absieht. Bei der einen Halbschwingung fließt der Schwingkreisstrom durch die Elemente 25, 26 also über die Schalter 21 und 24 und bei der anderen Halbschwingung über die Schalter 22 und 23. Auch in diesem Fall liefert der Serienresonanzwechselrichter seine Maximalleistung, wenn die GTO-Thyristoren in den elektronischen Schaltern kurz vor Erreichen des Nulldurchganges gesperrt werden und nach Ablauf der verkürzten Freiwerdezeit die im jeweils anderen Strompfad befindlichen GTO-Thyristoren gezündet werden.

## Ansprüche

1. Wechselrichteranordnung, insbesondere für einen Röntgengenerator, mit einem Serien-Schwingkreis und wenigstens zwei von je einer Halbschwingung des Schwingkreisstromes durchflossenen, im Gegentakt geschalteten elektronischen Schaltern, über die der Serien-Schwingkreis mit einer Gleichspannungsquelle koppelbar ist,
dadurch ekennzeichnet , daß als elektronische Schalter GTO-Thyristoren (3,4) dienen, die von einer Impulserzeugeranordnung (13) geschaltet sind, welche im Bereich des Nulldurchganges des Schwingkreisstroms jeweils einen Sperrimpuls erzeugt und durch welche ein Zündimpuls für den anschließend leitenden GTO-Thyristor (z.B. 4) nach einer definierten Verzögerungszeit (tq) nach dem Wirksamwerden des Sperrimpulses erzeugbar ist.
2. Wechselrichteranordnung nach Anspruch 1, dadurch gekennzeichnet , daß eine Meßeinrichtung (7,10) für den Schwingkreisstrom vorgesehen ist, die mit einer Komparatorschaltung gekoppelt (12) ist, die anspricht, wenn der Schwingkreisstrom einen Referenzwert ($i_s$) unterschreitet, und daß die Impulserzeugeranordnung von der Komparatorschaltung gesteuert wird, derart, daß der Sperrimpuls mit definierter Verzögerung ($t_d$) nach dem Unterschreiten des Referenzwertes erzeugt wird.
3. Wechselrichteranordnung nach Anspruch 2, dadurch gekennzeichnet, daß die Komparatorschaltung ein Fensterkomparator (12) ist, dessen Ausgangssignal innerhalb eines zum Nullpunkt des Schwingkreisstromes symmetrischen Bereichs einen ersten Zustand und beiderseits dieses Bereichs einen zweiten Zustand einnimmt.
4. Wechselrichteranordnung nach einem der Ansprüche 1 bis 3, dadurch gekennzeichnet , daß die Induktivität des Schwingkreises durch die Primärwicklung eines Transformators (8) gebildet wird, dessen Sekundärwicklung mit dem Heizkreis einer Röntgenröhre (9) gekoppelt ist (Fig. 2).

5. Wechselrichteranordnung nach einem der Ansprüche 1 bis 3 dadurch ekennzeichnet , daß die Induktivität des Schwingkreises durch die Primärwicklung eines Transformators (27) gebildet wird, dessen Sekundärwicklungen (28,29) mit einem Hochspannungsgleichrichter (30,31) zur Erzeugung einer Hochspannung für eine Röntgenröhre (9) gekoppelt ist.

FIG.1

FIG.2

1-II- PHD 89-139

FIG.3

FIG.4a

FIG.4b

FIG.5